Europäisches Patentamt

European Patent Office

Office européen des brevets

(11) Publication number: **0 107 315**
**B1**

## EUROPEAN PATENT SPECIFICATION

(45) Date of publication of patent specification: **24.05.89**

(51) Int. Cl.⁴: **A 21 D 2/26**

(21) Application number: **83305281.4**

(22) Date of filing: **09.09.83**

(54) Nutritional cookie.

(30) Priority: **10.09.82 US 416438**

(43) Date of publication of application:
**02.05.84 Bulletin 84/18**

(45) Publication of the grant of the patent:
**24.05.89 Bulletin 89/21**

(84) Designated Contracting States:
**AT BE CH DE FR GB IT LI LU NL SE**

(56) References cited:
**EP-A-0 052 046**
**GB-A- 546 666**
**GB-A-1 013 356**
**US-A-3 185 574**
**US-A-3 814 819**
**US-A-3 995 065**

(73) Proprietor: **NABISCO BRANDS, Inc.**
**Nabisco Brands Plaza**
**Parsippany New Jersey 07054 (US)**

(72) Inventor: **Warren, Alison B.**
**9 Williams Road**
**Chatham New Jersey 07928 (US)**
Inventor: **Constance, Patricia R.**
**25 Grand Avenue, Unit 4D**
**Hackensack New Jersey 07601 (US)**

(74) Representative: **Thomas, Roger Tamlyn et al**
**D. Young & Co. 10 Staple Inn**
**London WC1V 7RD (GB)**

Courier Press, Leamington Spa, England.

## Description

The present invention relates to cookies. As hereinafter described, it concerns cookies having high quality in terms of flavor, texture and mouthfeel which can be manufactured on conventional cookie making machinery, but yet provides a significant, balanced nutritional profile.

Workers have for years been trying to improve the nutritional value of dessert and snack food items for a number of reasons. For example, some workers have suggested that the control of certain diseases, such as hypoglycemia, may be fostered by diets which restrict carbohydrate intake. Further, workers interested in weight control diets attempted to eliminate unnecessary levels of carbohydrates and triglycerides. Still other workers wanted products which provide a concentrated, balanced nutrition in good tasting form which could be easily consumed by people occasionally too busy to eat a more-typical meal. Products of this latter group would also be useful for hospital or other institutional use where an individuals capacity to eat and digest foods may be restricted.

To meet these needs, a wide variety of nutritionally-fortified and modified products has been developed. Most of these have attempted to provide increased protein levels. Unfortunately, the addition of concentrated proteinaceous materials, capable of providing significant nutritional advantages, has been fraught with difficulty—typically, adversely affecting product taste, mouthfeel, texture or preparation.

For example, in U.S. Patent 3,679,433 to Pomeranz et al, there is disclosed a protein-fortified, yeast-leavened bread which requires the addition of glycolipids to maintain a suitable texture. According to that disclosure, from about 4 to about 16 parts of a protein concentrate is added per 100 parts of wheat flour, and without the addition of the glycolipids, even the small amount of added proteinaceous material will adversely affect the final product.

In U.S. Patent US—A—3,911,142 to Huelskamp et al, there is described a ready-to-eat snack food product which is high in protein content and low in wheat flour. The composition is disclosed to contain from 15 to 50% of a soy protein concentrate containing at least 70% protein, 10 to 17% whey powder, 10 to 50% nonfat dry milk, 7 to 15% wheat flour, 7 to 15% potato flakes, other minor ingredients, and 20 to 30% water. Unfortunately, the process must be accomplished according to a specific procedure which provides little tolerance for error. According to the disclosure, the dry ingredients must be preblended for about ten minutes if an acceptable product is to be achieved. Then, the water is added in increments, with the first three quarters of the water being first added and the product then being permitted to stand for twenty minutes to permit hydration through and through. Next, the additional water is added and the product is finally shaped and cooked. While the product is indicated to be suitable for use as a snack type wafer, the texture, mouthfeel and flavor of this particular product would be greatly different from conventional high quality cookies.

In addition to the products of Huelskamp et al, various soy proteinaceous materials have been employed in ready-to-eat breakfast cereals. For example, in U.S. Patent US—A—3,687,686 to Bedenk, U.S. Patent US—A—3,687,687 to Liepa and U.S. Patent US—A—3,689,279 to Bedenk, all disclose the use of soy hydrolysates to improve the nutritional value of ready-to-eat cereals while avoiding the normal tendency of these materials to toughen the texture. According to their disclosures, the proteolytic hydrolysis of soy allows the production of tender, puffed products. However, the taste, texture and mouthfeel of these products is also far distinct from that of high quality cookies.

In another approach to providing high-nitrition baked products, Hayward et al disclose an intermediate moisture, shelf-stable product in U.S. Patent US—A—3,950,545. According to their disclosure, it is necessary to control the wheat flour content to less than about 10% based on the weight of the product. Additionally, the product will contain one or more proteinaceous materials selected from the group consisting of egg albumin, casein, caseinate salts, and vegetable protein. In addition to the presence of from 15 to 45% moisture, these products contain from 3 to 15% glycerol, and the presence of these materials results in a very soft texture which is clearly distinct from conventional cookie products.

Also indicative of the concern of some prior art workers in reducing the level of wheat flour are U.S. Patent US—A—3,930,055 to Engelman et al and U.S. Patent US—A—3,446,623 to Gray et al. Engelman et al produce breads, rolls and cakes containing less than 10% carbohydrate and high levels of proteinaceous ingredients. While these products are baked, they are not cookie-like. Gray et al, on the other hand, discloses high protein cookies containing equal parts by weight of casein, sugar and a high protein flour, along with about 20% fat. Conventional wheat flour is not employed, and the high gluten content of the high protein flour makes the dough extremely rubbery. In addition to the high gluten content, the disclosed formulation also contains high levels of casein, on the order of about 25%. Gray et al disclosed that casein has not been used in many food applications because it is insoluble in water and has a vitreous, gritty texture when eaten. Additionally, when employed as sodium caseinate, the casein tends to bind water too tightly to permit baking in conventional fashion. Accordingly, Gray et al must forego conventional processing and freeze dry their dough without baking.

In U.S. Patent US—A—3,814,819 to Morgan, there is disclosed a protein-fortified food bar which is composed of several wafers stacked one above the other with a cream filling therebetween. The wafers are disclosed to contain about 10 parts flour and about 6 parts added protein, such as casein, with only 0.8 parts of oil. Thus, the principal source of protein in the wafer portion is casein or other milk protein. A preferred milk protein source is a casein-lactalbumin coprecipitate prepared by coprecipitation. In addition to the patent indicating that flavor problems exist due to the high level of milk proteins, these wafers would not provide the texture and mouthfeel associated with high quality cookie products.

The preparation of products resembling oatmeal or spice cookies is a disclosed object of U.S. Patent US—A—3,185,574 to Gabby *et al*. According to this disclosure, wafer-like baked pieces of high nutritional content are prepared from a dough containing 15 to 40% protein, 5 to 20% fat, and 35 to 65% carbohydrate. To maintain a dough consistency which can be worked on conventional machinery, Gabby *et al* disclose that it is necessary to limit the amount of wheat gluten to less than 20% of the protein content and that the remaining edible protein additive be of low water solubility. They disclosure that where this is not done, the proteins swell upon contact with the water to form a glue-like mass which is quite unmanageable. In addition to limiting the gluten content of the product, and the use of low-water-solubility protein ingredients such as soy flour, soy protein concentrate, calcium caseinate, defatted cottonseed flour and the like, it is disclosed that the process of mixing is also critical. It is disclosed that the gluten must be added to a dispersion comprising water, fat and sugar prior to adding the low-solubility protein materials. These other proteins must be added immediately prior to baking to eliminate excessive hydration and difficulties which would otherwise be encountered.

Accordingly, there remains a present need for a composition and a method for preparing a highly-nutritious cookie product from a dough having good machinability while maintaining the flavor, texture and mouthfeel normally associated with quality cookie products of more-typical, lower nutritional value.

Summary of the invention

As hereinafter described in detail, the invention seeks to provide

(a) a baked cookie product of high nutritional value which also has good flavor, texture and mouthfeel;

(b) a dough which exhibits good machinability and is formulated to provide a cookie product of high nutritional value with good flavor, texture and mouthfeel; and

(c) a simple process for preparing a cookie product having high nutritional value while maintaining the flavor, texture and mouthfeel normally associated with quality cookie products of more-typical, lower nutritional value.

According to one aspect the invention provides a baked cookie product of high nutritional value wherein the crumb portion contains from 15 to 25% protein and has a caloric density of from 4.25 to 5 kilocalories (17.8—20.9 kJ) per gram, and comprises a baked, leavened mixture comprising on a dry weight basis: from 20 to 40% wheat flour; from 15 to 40% sugar; from 10 to 25% triglyceride fat; from 7 to 17% casein; from 2 to 7% added wheat gluten; and whole eggs in an amount up to 3%; wherein from 25 to 50% of the total protein content is gluten from the wheat flour and added wheat gluten; wherein the egg, casein and added gluten in combination amount to from 10 to 25% of the dry weight of the product; and wherein the ratio of the dry weight of gluten, including the gluten component of the wheat flour and the added wheat gluten, to the dry weight of the casein to the dry weight of eggs is from 0.5:1:0.05 to 1:1:0.25, the leavened nature of said product being brought about through the action of a chemical leavening agent added to the mixture of ingredients from which said baked cookie product is formed.

According to a second aspect of the invention, there is provided a dough for preparing a baked, leavened cookie product having a crumb portion containing from 15 to 25% protein and having a caloric density of from 4.25 to 5 kilocalories (17.8—20.9 kJ) per gram, wherein from 25 to 50% of the protein content comprises gluten, the dough comprising an amount of water sufficient to form a machinable dough, and an amount of chemical leavening agent effective to provide a desired degree of rising, and on a dry weight basis: from 20 to 40% wheat flour; from 15 to 40% sugar; from 10 to 25% triglyceride fat; from 10 to 25% proteinaceous ingredients comprising a combination of casein, whole eggs and wheat gluten, and wherein the ratio of the dry weight of gluten, including the gluten component of the wheat flour and the added wheat gluten, to the dry weight of casein to the dry weight of eggs is from 0.5:1:0.05 to 1:1:0.25.

According to a third aspect of the invention, there is provided a process for preparing a baked, leavened cookie product of high nutritional value which has a crumb portion containing from 15 to 25% protein, and having a caloric density of from 4.25 to 5 kilocalories (17.8—20.9 kJ) per gram, the process comprising: creaming from 15 to 40% sugar with from 0.05 to 3% whole egg and from 10 to 25% triglyceride fat, all percentages being based on the dry weight of these ingredients and the dry weight of the total formulation; adding chemical leavening agent and water, in amounts sufficient upon addition of all ingredients to form a machinable dough which will rise upon baking, and mixing sufficiently to prepare a uniform dispersion; adding, on a dry weight basis, from 20 to 40% wheat flour and from 10 to 25% proteinaceous ingredients comprising a combination of casein and wheat gluten in amounts effective to give a total gluten content, including the gluten component of wheat flour and the added wheat gluten, which accounts for from 25 to 50% of the total protein content of the product and wherein the ratio of the dry weight of gluten, including the gluten component of the wheat flour, and the added wheat gluten, to the dry weight of casein to the dry weight of egg is from 0.5:1:0.05 to 1:1:0.25; shaping the dough; and baking the shaped dough.

Detailed description of preferred embodiments

Products of the present invention have, in addition to a high protein content and high quality in terms

3

of taste, texture and mouthfeel, a high degree of machinability of the doughs from which they are prepared. To provide a degree of objectivity, the term "machinable" is defined as: having the capability of being deposited as formed on available standard bakery equipment such as wire cut or rotary moulding equipment without use of special modifications or design changes and within acceptable weight and shape specifications. It is also necessary in defining the compositions of the invention at various stages of processing to identify the basis for determining the percentage figures. Unless otherwise indicated, all parts and percentages will be based upon the weight of the component as a part of the total composition at that particular stage in processing. At points within the disclosure, the composition will be defined in terms of percentages on an "as is" weight basis and at other points, the composition must necessarily be defined in terms of a "dry solids content" or "dry weight" basis. By the term "as is", it is meant that the normal commercial grade of ingredient is employed along with all volatile and non-volatile materials normally present. On the other hand, the terms "dry weight" and "dry solids content" are used interchangeably to mean the weight of the component only in terms of a totally dry product having all nonchemically combined water and other volatile materials removed. For example, soft winter wheat flour will typically contain from about 10 to about 14% moisture, and this moisture content will be included in the statement of the "as is" weight; however, the weight of the same flour component on a "dry weight" or "dry solids content" basis will be reduced from the "as is" weight due to the elimination of moisture.

The present invention enables the preparation of a wide variety of familiar cookie varieties in terms of taste and texture from an essentially standard formulation so long as the major ingredients are maintained within the disclosed ranges. By virtue of the discovery of the present invention, it is possible to maintain the use of significant quantities of wheat flour and in the formulation, thereby taking advantage of the economic, nutritional and functional properties of wheat flour, while achieving very significant increases in overall protein content by the use of added protein material which necessarily comprises casein, wheat gluten, and preferably egg, in the disclosed amounts, especially when employing them at the preferred levels both in relationship to each other and the other components of the composition. While the specific examples provided later in this description provide detailed information on the preparation of a shortbread-type cookie, a sugar cookie and a chocolate chip cookie, the present invention is not limited to these specific tastes or textures, but in fact can be employed to achieve an even wider variety of products.

The wheat flour component employed according to the present invention can be any of the commercially available forms which are known to the art to be acceptable for cookie production. One particularly desirable type of flour is milled from soft red winter wheat. Preferably, it will be unbleached and enriched according to the standards of identity for enriched flour. Typically, wheat flours of this type will have protein contents of from 7.5 to 9% and moisture contents up to 14%. Preferably, it will exhibit a viscosity (AACC Method 56—80) of 25 to 45° MacMichael, and a Hagberg falling number (AACC Method 56—81b) of at least 325.

Compositionally, the wheat flour will contain wheat gluten and starch. The amount of wheat flour employed in the formulations according to the present invention is important not only for its starch content, but for the amount of wheat gluten which it provides. The compositions of the invention will typically contain a total wheat gluten content including the wheat gluten from the wheat flour and the added wheat gluten which will be discussed later, of from 25 to 50% of the total protein content of the product, the percentage being based upon the dry weight of the wheat gluten to the dry weight of the total composition. To achieve this desirable ratio in a composition which provides the final product textural, taste and mouthfeel characteristics, as well as to provide a desirably machinable dough, the flour will be employed in an amount of from 20 to 40% of the composition on a dry weight basis.

Sugars are also employed in the composition to provide sweetness in the final product and to provide an additional carbohydrate calorie source. The products of the invention will have a caloric density of from 4.25 to 5, and preferably from 4.4 to 4.9, kilocalories (4.4—20.5 kJ) per gram. Of this, preferably from 40 to 50% of the calories will come from carbohydrate sources, while from 15 to 20% will come from protein sources, and from 30 to 40% will come from fat. Broadly, the amount of sugar employed will be within the range of from 15 to 40%, based upon the dry weight of the composition. Typical of the sugars which can be employed are sucrose, glucose, fructose, maltose, corn syrup and corn syrup solids. Preferred among these are sucrose and corn syrup. One type of sucrose found to be useful is finely granulated sugar which can be obtained from either sugar cane or sugar beets and has a particle size distribution such that a maximum of 5% is retained on a number 20 US standard sieve (opening=0.84 mm), a maximum of 15% passes through a number 100 US standard sieve (opening=0.149 mm), and a maximum of 5% passes through a number 140 US standard sieve (opening=0.105 mm).

The triglyceride fat employed in the composition can be selected from a wide variety of commercially-available triglyceride materials. The fat can be selected from either the liquid or plastic-type shortenings derived from vegetable oils such as soybean or cottonseed and from animal fats such as lard. Additionally, any of the typical margarine oils or butterfat can be employed.

To achieve a practical product shelf life, the triglyceride fat should also contain sufficient antioxidant to maintain freshness for a period of at least about six months and preferably up to about twelve months of storage. One antioxidant system which has been found to be effective will comprise glyceryl monooleate, butylated hydroxyanisole (BHA), tertiary butyl hydroquinone (TBHQ) and citric acid. According to one specific embodiment, an antioxidant system is composed of 28% of butylated hydroxyanisole, 12% tertiary butylhydroquinone, 6% citric acid, 20% glyceryl monooleate and 34% propylene glycol. This antioxidant system can be employed at a level of about 0.05% of the weight of the fat.

One especially preferred partially-hydrogenated soy-bean oil will havs a Wiley melting point of from 95° to 99°F, a maximum iodine value of 76, and a solid fat index at 50°F of from 34 to 43 and at 92°F of from 3 to 8. Other hydrogenated and non-hydrogenated fats can of course be employed; however, it is preferred to employ those which are partially hydrogenated to achieve a Wiley melting point of at least 90°F and an iodine value of no higher than 90. Liquid oils and those which are not hydrogenated to the preferred degree, will be more difficult to stabilize in terms of flavor over extended periods of storage.

The proteinaceous ingredients employed in the composition are important not only for their ability to increase the protein content of the crumb portion to within the range of from 15 to 25%, and preferably from 15 to 20%, on a dry weight basis, they are also important to achieve the proper rheological properties of the dough to enable mixing and shaping by conventional cookie forming equipment and to achieve the desired texture, flavor and mouthfeel in the ultimate product. For the dough to be properly machinable, it must be capable of being deposited as formed within required weight and shape specifications on standard, unmodified bakery production equipment as known to be consistent with state of the art equipment currently available in the baking industry. To achieve this quality, the proteinaceous ingredients must hydrate to the proper degree within conventional parameters of mixing times, temperatures and intensities. Proteinaceous materials which hydrate too slowly, will not permit the development of the proper consistency, in that they will be inconsistent in deposit weight and shape integrity. On the other hand, proteinaceous materials which hydrate too rapidly or to too great an extent, will adversely affect the properties of the dough in that it will become too dry and inconsistent in deposit machine performance and will result in diminished finished product quality and integrity. Typically, doughs which are prepared from poorly wettable proteins in too great a proportion will have a dry, gritty mouth feel and a crumbly texture. On the other hand, products prepared with doughs containing too high a degree of the rapidly wetting proteinaceous materials will tend to be too tough, lacking the proper degree of crumbliness normally associated with cookie products.

The proteinaceous ingredients added in addition to the wheat flour will be employed in an amount of from 10 to 25% based upon the dry weight of the ingredients to the dry weight of the total formulation. To achieve the proper dough and final product characteristics, the proteinaceous ingredients will comprise a combination of casein, wheat gluten and preferably whole egg, in an amount of from 8 to 20% based upon the dry weight of the composition. Individually, the casein will typically comprise from 5 to 17% of the weight of the composition. The wheat gluten will be employed in an amount sufficient to provide the overall composition, including the flour with its gluten component, with a total wheat gluten content of from 25 to 50% of the dry weight of the protein content. Typically, the egg content including whole egg and egg white is preferably within the range of from 2 to 12%. The wheat gluten will typically be employed at a level of from 2 to 7% based upon the dry weight of the composition. It has been found that a desirable balance of properties can be achieved where the ratio of the dry weight of gluten (total wheat gluten content, including the gluten from the wheat and the added gluten) to casein is within the range of from 0.5:1 to about 1:1. The ratio of gluten to casein to egg protein will be from 0.5:1:0.05 to 1:1:0.25.

Among the suitable caseins are those produced by controlled acidification of pasteurized skimmed milk to produce casein curd which is then extensively washed to remove occluded milk solids other than casein and is then dried and ground. Typically, this material will be very clean in taste and be free from lactose. A suitable form of wheat gluten is that known as vital wheat gluten which is processed from wheat flour to which water has been added to prepare a dough which is gently kneaded as additional water is added to wash starch and water soluble materials from the gluten. The water is preferably removed rapidly without subjecting the gluten to high temperatures and is flash or spray dried prior to screening to the desired particle size. Typical products will contain a minimum of 75% protein and from 12 to 15% carbohydrates on a dry weight basis.

In addition to the casein and the added wheat gluten, other typical proteinaceous materials can be employed in minor amounts to achieve the desired protein content. Among the materials are soy flour, soy concentrate and soy isolate, egg, and whey protein concentrate. The egg can be supplied as dry white, yolk or whole egg, or it can be added wet from fresh or frozen commercial sources. Egg is a particularly desirable additive in that it has a high PER, typically 2.5 or above. Where soy is employed, care must be taken to avoid the typical soy flavor which is difficult to remove or mask. These additional proteinaceous materials will typically be employed in amounts of less than about 5% based upon the dry weight of the composition and in the case of eggs will preferably be employed at a level of from 2 to 12% while whole eggs will be present up to about 3%, most typically .05 to 3%, on this weight basis.

To achieve the desired nutritional content and balance of the product, significant nutritional amounts of vitamins and minerals may be added. Preferably, sufficient vitamins and minerals will be added to provide about 25% per serving of the US recommended daily allowance for each of those established. According to one embodiment, a serving will comprise 57—60 grams and contain 240—260 kilocalories. Preferably, the product will be fortified appropriately to achieve the following standards.

Gross analysis

| Source | Level per serving | |
| | Range | Caloric distribution |
| --- | --- | --- |
| Protein | 9.4—12.5 G | 15—20% |
| Fat | 8.3—11.1 G | 30—40% |
| Carbohydrate | 28.1—31.2 G | 45—50% |
| Calories/J | 240/100.3—260/108.7 | |

Minerals

| Nutrient | Level per serving | |
| | Preferred level | Range |
| --- | --- | --- |
| Sodium[1] | 275 MG | 250—375 MG |
| Potassium[1] | 275 MG | 250—350 MG |
| Chloride (Soluble)[1] | 330 MG | 300—500 MG |
| Calcium[2] | 242 MG | 220—300 MG |
| Phosphorus | 242 MG | 220—300 MG |
| Magnesium | 110 MG | 110—150 MG |
| Iodine | 38.5 MCG | 35—70 MCG |
| Iron | 4.4 MG | 4.0—6.0 MG |
| Zinc | 4.4 MG | 4—6 MG |
| Manganese | 1.1 MG | 1—1.5 MG |
| Copper | .44 MG | 0.4—1.0 MG |

Vitamins

| Nutrient | Level per serving | |
| | Preferred level | Range |
| --- | --- | --- |
| Biotin | 52 MCG | 40—75 MCG |
| Folic acid | 140 MCG | 100—200 MCG |
| Niacin | 6.5 MG | 5—7 MG |
| Pantothenic acid | 3.0 MG | 2.5—5 MG |
| Pyridoxine HCl ($B_6$) | .72 MG | .55—1.10 MG |
| Riboflavin ($B_2$) | 0.510 MG | .425—1.00 MG |
| Thiamine mononitrate ($B_1$) | .43 MG | .36—.72 MG |
| Vitamin A | 1625 IU | 1250—1875 IU |
| Vitamin $B_{12}$ | 1.8 MCG | 1.5—2.0 MCG |
| Vitamin C | 33 MG | 15—150 MG |
| Vitamin E | 9.75 IU | 7.5—15 IU |
| Vitamin D | 130 IU | 100—150 IU |
| Vitamin $K_1$ | 15 MCG | 15—20 MCG |
| Choline (Supplied as Lecithin) | | |

[1] Sodium and potassium to chloride ratio should be 1.25:1
[2] Calcium to phosphorous ratio must be between 0.8 to 1.3 (1.0 is preferred)

The compositions of the invention can also employ particulate inlays, such as chocolate chips, nuts, raisins and the like where desired for variety. When employing these inlays, their nutritional content can easily be taken into account and the formula adjusted within the above guide-lines to provide products which still meet the preferred nutritional guide-lines. For example, where it is desired to employ chocolate chips, their sucrose and triglyceride fat content can be taken into account and the formula adjusted accordingly, but still remaining within the broad ranges set forth above.

The use of the composition described above enables the preparation of high quality cookie products on conventional machinery. Taken in its broad aspects, the process will comprise creaming the sugar and fat portions of the composition, adding chemical leavening agents and water thereto to provide a uniform dispersion, adding the flour and proteinaceous ingredients to the dispersion to form a dough, shaping the dough, and baking. The process is preferably conducted batchwise, with mixing being accomplished in suitable upright or horizontal mixers such as Peerless or Readco mixers. These types of mixers provide adequate blending and creaming capability in a multi-stage mixing sequence. Preferably, dough batch sizes should be predicated on a 30—45 minute running time and mixing schedule, if possible, to minimize excessive hydration or drying prior to and during depositing.

In the initial stage of the process, the dry ingredients other than the flour, casein and gluten, such as sugars, salt, dry eggs, dry flavours, vitamins and minerals are preblended in the mixer. After a sufficient period of mixing, the triglyceride fat and any emulsifiers to be used are added and mixed in the creaming stage. The initial dry mixing will typically take about two minutes while the creaming stage will typically be completed within about five minutes of blending at high speed. To the resulting creamed mixture, syrups, liquid flavors and the like are then added and blended in, typically mixing for about three minutes. Among these liquid ingredients may be corn syrup, vanilla flavoring, and the like.

To achieve the proper rising of the dough during baking, a chemical leavening agent is employed in an amount effective to provide the desired degree of rising. Typical of the chemical leavening agents which can be employed are sodium bicarbonate, ammonium bicarbonate, calcium acid phosphate and sodium acid pyrophosphate. Typically, these are employed at levels of from 0.1 to 0.8% based upon the total dry weight of the composition. The preferred procedure for adding the leavening agent during mixing is to dissolve them in one-half of the water prior to mixing with the creamed ingredients. After uniform dispersion is achieved, the other half of the water is added, with mixing continuing for about three minutes on high speed to again achieve a uniform dispersion. Next, the flour, proteinaceous ingredients, and other dry ingredients not previously added, such as chocolate drops, raisins, nut-meats, and the like, are added to the dispersion and mixed to obtain a dough of uniform consistency. Typically, mixing will take about two and one half minutes.

The dough, after formation, can be shaped in the manner customary for the particular type of cookie product desired. For example, it can be wire cut or rotary molded as desired. After shaping, the individual dough portions are then baked in conventional fashion, such as on a sheet metal continuous oven band employing temperatures and bake times sufficient to yield a baked product with a moisture content of about 5% or less. If necessary, heated post conditioning equipment can be used to assist with achieving finished product final moisture limits. The product is then cooled to the required temperature of less than about 100°F (37.8°C) for packaging. Packaging can be accomplished in the manner typical for the particular type of cookie being formed, but will also preferably contain a foil pouch to preserve the freshness of the product over extended periods of time.

The following examples are presented for the purpose of further illustrating and explaining the present invention and are not to be taken as limiting in any regard. Unless otherwise indicated, all parts and percentages are based on an as is weight percent of the ingredients.

Example 1

According to this example, a sugar cookie having a protein content of about 18% of the dry weight and a caloric density of about 4.7 kilocalories per gram is prepared from the following formulation:

| Ingredients | Parts |
| --- | --- |
| Flour | 34.5 |
| Partially hydrogenated soybean oil, I.V. 76 (containing antioxidant) | 17 |
| Sucrose | 15 |
| Casein | 9.5 |
| Water | 9 |
| Vital wheat gluten | 5.5 |
| Mineral premix | 3 |
| Corn syrup | 2 |
| Whole egg solids | 1.5 |
| Flavors | 1.0 |
| Sodium chloride | .8 |
| Ammonium bicarbonate | .4 |
| Sodium acid pyrophosphate | .2 |
| Vitamin premix | .2 |
| Sodium bicarbonate | .2 |
| Potassium chloride | .17 |
| Lecithin | .03 |

In the initial stage of processing, the sugar, eggs, sodium chloride, potassium chloride and vitamin and mineral premixes are mixed for about two minutes at low speed in an upright mixer fitted with a single, sigma agitator blade. To the resulting uniform admixture, the shortening and lecithin are added and creamed for about five minutes at high speed. To the resulting creamed mixture, the flavors and corn syrup are added and mixed for about three minutes at high speed. Thereafter, the ammonium bicarbonate is dissolved in about one half of the water, and the soda is added to the other half of the water. Each of these is added slowly to the mixer, and the total mixture is then mixed for about three minutes on high speed to form the uniform dispersion. Next, the flour, gluten, casein and sodium acid pyrophosphate are admixed for about two and a half minutes to achieve a uniform dough consistency.

Utilizing Werner Lehara wire cut depositing equipment that delivers dough deposits each weighing about 17.25 grams, the dough is cut and deposited onto the solid oven band. Die cups employed in the wire cut depositing equipment are sized to effectively deliver round dough pieces. A sugar topping amounting to about 0.3 grams of sugar per cookie is deposited onto the dough pieces prior to baking. Baking is accomplished in a Baker Perkins oven using a temperature of about 350°F (176.7°C) and a bake time of about 12 minutes. After baking, the product is cooled to temperature of about 100°F (37.8°C) for packaging in a heat-sealable foil pouch.

Example 2

According to this example, a chocolate chip cookie having the same nutritional specification as the cookie in Example 1 is prepared according to the following formulation.

| Ingredients | Parts |
| --- | --- |
| Sucrose | 22 |
| Flour | 21 |
| Chocolate drops | 10.5 |
| Partially hydrogenated soybean oil, I.V. 76 (containing antioxidant) | 10.5 |
| Casein | 7 |
| Water | 6 |
| Brown sugar | 5 |
| Corn syrup | 3.5 |
| Soy protein | 3 |
| Mineral premix | 3 |
| Vital wheat gluten | 2.5 |
| Egg whites | 1.75 |
| Emulsifier blend | .8 |
| Flavors | 1.0 |
| Sodium chloride | .8 |
| Ammonium bicarbonate | .5 |
| Whole egg solids | .5 |
| Calcium acid phosphate | .2 |
| Dough conditioner | .2 |
| Vitamin premix | .2 |
| Lecithin | .05 |

The process for preparing the cookies of this example is essentially that as described in Example 1 except that in the initial state of mixing, the sucrose, brown sugar, sodium chloride, dry flavors, egg whites, whole eggs, vitamin and mineral premixes, and dough conditioners are mixed for about three minutes on low speed. To this resulting uniform admixture, the shortening, emulsifier, lecithin, and liquid flavors are added and creamed for about five minutes on high speed. Next, the amonium bicarbonate is dissolved in about one-half of the water and this is added along with the corn syrup and then the remainder of the water to the creamed mixture and the resulting admixture is mixed for about five minutes at high speed to achieve a uniform blend. To this resulting uniform blend, the flour, gluten, casein, calcium acid phosphate and soy protein are then admixed and blended for about two minutes on low speed to achieve a machinable dough. Next, the chocolate drops are added and mixed for about thirty seconds on low speed to uniformly disperse them throughout the admixture. The product is then shaped and baked in the manner described in Example 1, without the sugar topping.

Example 3

According to this example, a shortbread cookie having essentially the same nutritional profile as for the products in Examples 1 and 2 is prepared from the following formulation:

| Ingredients | Parts |
|---|---|
| Flour | 33 |
| Partially hydrogenated soybean oil, IV 76 (containing antioxidant) | 19 |
| Casein | 14.5 |
| Sucrose | 14 |
| Water | 5 |
| Vital wheat gluten | 4 |
| Mineral blend | 3 |
| Whole egg solids | 2 |
| Yellow corn flour | 2 |
| Flavors | 1.25 |
| Sodium chloride | .75 |
| Dough conditioner | .5 |
| Emulsifier blend | .5 |
| Vitamin premix | .2 |
| Lecithin | .1 |
| Sodium bicarbonate | .08 |
| Ammonium bicarbonate | .06 |
| Calcium acid phosphate | .06 |

The processing is essentially the same as for Examples 1 and 2 but differing in the mixing procedure due to the change in formulation and in the forming procedure. The dry premix according to this example will comprise the eggs, the sucrose, the dough conditioner, the sodium chloride, and the vitamin and mineral premixes. This dry mix is blended for about three minutes on low speed. To the resulting dry blend, the shortening, emulsifier, lecithin, and flavors, are added and mixed for three minutes on high speed to form a uniform creamed mixture. To the creamed mixture, one-half of the water containing the sodium bicarbonate and one-half of the water containing the ammonium bicarbonate are added slowly and mixed for about five minutes on high speed to obtain a uniform dispersion. To the resulting dispersion, the calcium acid phosphate, flour, casein, gluten and corn flour are added and mixed for about three minutes on low speed to form a machinable dough. The dough is then shaped using Werner Lehara rotary molding equipment, and are deposited on the oven band. The die cups are approximately 2.125 inches (5.397 cm) by 0.190 inches (4.826 mm). The individual dough pieces will weigh about 11.4 grams, with a serving equalling 6 pieces versus 4 for the other two products. The dough pieces are then baked and packaged in the manner set forth in Example 1.

## Claims

1. A baked cookie product of high nutritional value wherein the crumb portion contains from 15 to 25% protein and has a caloric density of from 4.25 to 5 kilocalories (17.8—20.9 kJ) per gram, and comprises a baked, leavened mixture comprising on a dry weight basis: from 20 to 40% wheat flour; from 15 to 40% sugar; from 10 to 25% triglyceride fat; from 7 to 17% casein; from 2 to 7% added wheat gluten; and whole eggs in an amount up to 3%; wherein from 25 to 50% of the total protein content is gluten from the wheat flour and added wheat gluten; wherein the egg, casein and added gluten in combination amount to from 10 to 25% of the dry weight of the product; and wherein the ratio of the dry weight of gluten, including the gluten component of the wheat flour and the added wheat gluten, to the dry weight of the casein to the dry weight of eggs is from 0.5:1:0.05 to 1:1:0.25, the leavened nature of said product being brought about through the action of a chemical leavening agent added to the mixture of ingredients from which said baked cookie is product is formed.

2. A baked cookie product according to claim 1 wherein the protein content is within the range of from 15 to 20%.

3. A baked cookie product according to claim 1 or 2 wherein the caloric density is within the range of from 4.4 to 4.9 kilocalories (18.4—20.5 kJ) per gram.

4. A baked cookie product according to claim 1, 2 or 3 which further comprises particulate inlays within the crumb portion.

5. A dough for preparing a baked, leavened cookie product having a crumb portion containing from 15 to 25% protein and having a caloric density of from 4.25 to 5 kilocalories (17.8—20.9 kJ) per gram, wherein from 25 to 50% of the protein content comprises gluten, the dough comprising an amount of water sufficient to form a machinable dough, and an amount of chemical leavening agent effective to provide a desired degree of rising, and on a dry weight basis: from 20 to 40% wheat flour; from 15 to 40% sugar; from 10 to 25% triglyceride fat; from 10 to 25% proteinaceous ingredients comprising a combination of casein, whole eggs and wheat gluten, and wherein the ratio of the dry weight of gluten, including the gluten component of the wheat flour and the added wheat gluten, to the dry weight of casein to the dry weight of eggs is from 0.5:1:0.05 to 1:1:0.25.

6. A dough according to claim 5 in which said whole egg is present in an amount up to about 3%.

7. A process for preparing a baked, leavened cookie product of high nutritional value which has a crumb portion containing from 15 to 25% protein, and having a caloric density of from 4.25 to 5 kilocalories (17.8—20.9 kJ) per gram, the process comprising: creaming from 15 to 40% sugar with from 0.05 to 3% whole egg and from 10 to 25% triglyceride fat, all percentages being based on the dry weight of these ingredients and the dry weight of the total formulation; adding chemical leavening agent and water, in amounts sufficient upon addition of all ingredients to form a machinable dough which will rise upon baking, and mixing sufficiently to prepare a uniform dispersion; adding, on a dry weight basis, from 20 to 40% wheat flour and from 10 to 25% proteinaceous ingredients comprising a combination of casein and wheat gluten in amounts effective to give a total gluten content, including the gluten component of wheat flour and the added wheat gluten, which accounts for from 25 to 50% of the total protein content of the product and wherein the ratio of the dry weight of gluten, including the gluten component of the wheat flour, and the added wheat gluten, to the dry weight of casein to the dry weight of egg is from 0.5:1:0.05 to 1:1:0.25; shaping the dough; and baking the shaped dough.

8. A process according to claim 7 wherein dry whole egg solids are added along with the sugar in an amount of from 0.05 to 3% of the dry weight of the product.

9. A process according to claim 7 wherein the product has a protein content of from 15 to 20% and a caloric density of from 4.4 to 4.9 kilocalories (18.4—20.5 kJ) per gram, both values being based on dry weight.

10. A process according to claim 9 wherein particulate inlays are admixed with the dough prior to shaping.

## Patentansprüche

1. Gebackenes Plätzchenprodukt mit hohem Nährwert, worin der Krumenteil 15 bis 25% Protein enthält und eine kalorische Dichte von 4,25 bis 5 Kilokalorien (17,8—20,9 kJ) pro Gramm hat, und eine gebackene, aufgegangene Mischung umfaßt, die auf trockener Gewichtsbasis umfaßt: 20 bis 40% Weizenmehl; 15 bis 40% Zucker, 10 bis 25% Triglyceridfett; 7 bis 17% Casein; 2 bis 7% zugesetztes Weizengluten; und ganze Eier in einer Menge bis zu 3%; worin 25 bis 50% des gesamten Proteingehalts Gluten aus dem Weizenmehl und zugesetztem Weizengluten ist; worin das Ei, Casein und zugesetztes Gluten zusammen 10 bis 25% des Trockengewichtes des Produktes betragen; und worin das Verhältnis des Trockengewichtes des Glutens, umfassend die Glutenkomponente des Weizenmehls und das zugesetzte Weizengluten, zum Trockengewicht des Caseins zum Trockengewicht der Eier 0,5:1:0.05 bis 1:1:0.25 beträgt, wobei der aufgegangene Charakter des genannten Produktes durch die Wirkung eines chemischen Treibmittels entsteht, das der Mischung aus den Bestandteilen, aus denen das genannten gebackene Plätzchenprodukt hergestellt wird, beigemischt wird.

2. Gebackenes Plätzchenprodukt nach Anspruch 1, dadurch gekennzeichnet, daß der Proteingehalt im Bereich von 15 bis 20% liegt.

3. Gebackenes Plätzchenprodukt nach Anspruch 1 oder 2, dadurch gekennzeichnet, daß die kalorische Dichte im Bereich von 4,4 bis 4,9 Kilokalorien (18,4—20,5 kJ) pro Gramm liegt.

4. Gebackenes Plätzchenprodukt nach Anspruch 1, 2 oder 3, das weiters aus Partikeln bestehende Einlagen innerhalb des Krumenteiles umfaßt.

5. Teig zur Herstellung eines gebackenen, aufgegangenen Plätzchenproduktes mit einem Krumenteil, enthaltend 15 bis 25% Protein und mit einer kalorischen Dichte von 4,25 bis 5 Kilokalorien (17,8—20,9 kJ) pro Gramm, worin 25 bis 50% des Proteingehaltes Gluten umfaßt, wobei der Teig umfaßt: eine Wassermenge, die zur Herstellung eines maschinell bearbeitbaren Teiges ausreicht, und eine Menge an chemischem Treibmittel, die einen gewünschten Aufgehrad bewirkt, und auf trockener Gewichtsbasis: 20 bis 40% Weizenmehl; 15 bis 40% Zucker; 10 bis 25% Triglyceridfett; 10 bis 25% eiweißartige Bestandteile, umfassend eine Kombination aus Casein, ganzen Eiern und Weizengluten, und worin das Verhältnis des Trockengewichtes des Glutens, umfassend die Glutenkomponente des Weizenmehls und das zugesetzte Weizengluten, zum Trockengewicht des Caseins zum Trockengewicht der Eier 0,5:1:0,05 bis 1:1:0,25 beträgt.

6. Teig nach Anspruch 5, in welchem das genannte ganze Ei in einer Menge bis zu ungefähr 3% enthalten ist.

7. Verfahren zur Herstellung eines gebackenen, aufgegangenen Plätzchenproduktes mit hohem Nährwert, das einen Krumenteil, enthaltend 15 bis 25% Protein, und eine kalorische Dichte von 4,25 bis 5 Kilo-kalorien (17,8 bis 20,9 kJ) pro Gramm hat, wobei das Verfahren umfaßt: Schaumigschlagen von 15 bis 40% Zucker mit 0,05 bis 3% ganzem Ei und 10 bis 25% Triglyceridfett, wobei alle Prozentsätze vom Trockengewicht dieser Bestandteile und vom Trockengewicht der gesamten Formulierung berechnet werden; Zusetzen von chemischen Treibmittel und Wasser in Mengen, die bei Zugabe von allen Bestandteilen zur Herstellung eines maschinell bearbeitbaren, beim Backen aufgehenden Teiges ausreichen, und ausreichendes Mischen zur Herstellung einer einheitlichen Dispersion; Zusetzen, auf trockener Gewichtsbasis, von 20 bis 40% Weizenmehl und 10 bis 25% eiweißartigen Bestandteilen umfassend eine Kombination von Casein und Weizengluten in Mengen, die zur Herstellung eines Gesamtglutengehalts, umfassend die Glutenkomponente von Weizenmehl und das zugesetzte Weizengluten, der 25 bis 50% des gesamten Proteingehalts des Produktes ausmacht, und worin das Verhältnis des Trockengewichtes des Glutens, umfassend die Glutenkomponente des Weizenmehls und das zugesetzte Weizengluten, zum Trockengewicht des Caseins zum Trockengewicht des Eis 0,5:1:0,05 bis 1:1:0,25 beträgt; Formen des Teiges; und Backen des geformten Teiges.

8. Verfahren nach Anspruch 7, dadurch gekennzeichnet, daß daß trockene Ganzeifeststoffe zusammen mit dem Zucker in einer Menge von 0,05 bis 3% des Trockengewichtes des Produktes beigemischt werden.

9. Verfahren nach Anspruch 7, dadurch gekennzeichnet, daß das Produkt einen Proteingehalt von 15 bis 20% und eine kalorische Dichte von 4,4 bis 4,9 Kilo-kalorien (18,4—20,5 kJ) pro Gramm hat, wobei beide Werte von Trockengewicht berechnet werden.

10. Verfahren nach Anspruch 9, dadurch gekennzeichnet, daß aus Partikeln bestehende Einlagen mit dem Teig vor dem Formen vermischt werden.

**Revendications**

1. Biscuit cuit de haute valeur nitritive dont la portion de croûte contient 15 à 25% de protéines et à une densité calorique de 17,8 à 20,9 Kg/g (4,25 à 5 Kcal/g) et qui comprend un mélange levé et cuit comprenant en poids sec: 20 à 40% de farine de froment; 15 à 40% de sucre; 10 à 25% de graisse triglycéridique; 7 à 17% de caséine; 2 à 7% de gluten de blé ajouté; et des oeufs entiers en une quantité d'au plus 3%; où de 25 à 50% de la teneur totale en protéines sont constitués de gluten de la farine de froment et de gluten de blé ajouté; où l'oeuf, la caséine et le gluten ajouté en combinaison constituent de 10 à 25% du poids sec du produit; et où le rapport du poids sec du gluten, y compris le gluten constitutif de la farine de froment et le gluten de blé ajouté, au poids sec de la caséine au poids sec des oeufs est de 0,5/1/0,05 à 1/1/0,25, la nature levée dudit produit étant due à l'action d'une levure chimique ajoutée au mélange des ingrédients dont ledit biscuit cuit est formé.

2. Biscuit cuit selon la revendication 1 où la teneur en protéines est dans la gamme de 15 à 20%.

3. Biscuit cuit selon la revendication 1 ou 2 où la densité calorique est dans la gamme de 18,4—20,5 kJ/g (4,4 à 4,9 kcal/g).

4. Biscuit cuit selon la revendication 1, 2 ou 3 qui comprend de plus des inclusions dans la portion de croûte.

5. Pâte pour préparer un biscuit levé et cuit ayant une portion de croûte contenant de 15 à 25% de protéines ayant une densité calorique de 17,8 à 20,9 kJ/g (4,25 à 5 kcal/g) où de 25 à 50% de la teneur en protéines sont constitués de gluten, la pâte comprenant une quantité d'eau suffisante pour former une pâte se prêtant au traitement mécanique, et une quantité d'une levure chimique efficace pour assurer le degrée désiré de levée et en poids sec: de 20 à 40% de farine de froment; de 15 à 40% de sucre; de 10 à 25% de graisse triglycéridique; de 10 à 25% d'ingrédients protéiniques comprend une combinaison de caséine, d'oeufs entiers et de gluten de blé, et où le rapport du poids sec du gluten, y compris le gluten constitutif de la farine de froment et le gluten de blé ajouté, au poids sec de la caséine au poids sec des oeufs est de 0,5/1/0,05 à 1/1/0,25.

6. Pâte selon la revendication 5, dans laquelle lesdits oeufs entiers sont présents en une quantité d'au plus environ 3%.

7. Procédé pour préparer un biscuit levé et cuit de haute valeur nutritive ayant une portion de croûte contenant 15 à 25% de protéines, et ayant une densité. calorique de 17,8 à 20,9 kJ/g (4,25 à 5 kcal/g), le procédé consistant à: battre en crème de 15 à 40% de sucre avec de 0,05% à 3% d'oeufs entiers et de 10 à 25% de graisse triglycéridique, tous les pourcentages étant exprimés relativement au poids sec de ces ingrédients et au poids sec de la composition totale; ajouter une levure chimique et de l'eau en des quantités suffisantes pour que, après l'addition de tous les ingrédients, il se forme une pâte se prêtant au traitement mécanique levant lors de la cuisson et mélanger suffisamment pour préparer une dispersion uniforme; ajouter, en poids sec, de 20 à 40% de farine de froment et de 10 à 25% d'ingrédients protéiniques comprenant une combinaison de caséine, de gluten de blé en des quantités efficaces pour obtenir une teneur totale en gluten, y compris le gluten constitutif de la farine de froment et le gluten de blé ajouté, constituant de 25 à 50% de la teneur totale en protéines du produit et où le rapport du poids sec du gluten, y compris le gluten constitutif de la farine de blé et le gluten de blé ajouté, au poids sec de la caséine au poids sec des oeufs est de 0,5/1/0,05 à 1/1/0,25; façonner la pâte et cuire la pâte façonnée.

8. Procédé selon la revendication 7, dans lequel on ajoute des oeufs entiers en poudre avec le sucre en une quantité de 0,05 à 3% du poids sec du produit.

9. Procédé selon la revendication 7 où le produit a une teneur en protéines de 15 à 20% en une densité calorique de 18,4 à 20,5 kJ/g (4,4 à 4,9 kcal/g), les deux valeurs étant relatives au poids sec.

10. Procédé selon la revendication 9, dans lequel des inclusions en particules sont mélangées à la pâte avant le façonnage.